# EUROPEAN PATENT SPECIFICATION

(11) **EP 3 036 998 B1**
(45) Date of publication and mention of the grant of the patent: **14.03.2018**
(21) Application number: 15201748.9
(22) Date of filing: 21.12.2015
(51) Int. Cl.: A23G 9/22, A23G 9/08, A47F 3/04, A47F 13/08, A47J 43/28

(54) **DISPLAY BATCH FREEZER FOR ICE-CREAMS, SORBETS, SLUSHES AND SIMILAR PRODUCTS**
AUSLAGENCHARGENGEFRIERGERÄT FÜR SPEISEEIS, SORBETS, SLUSH-EIS UND ÄHNLICHEN PRODUKTEN
CONGÉLATEUR AVEC AFFICHAGE PAR LOTS POUR DES CRÈMES GLACÉES, SORBETS, GRANITÉS ET PRODUITS SIMILAIRES

(30) Priority: 22.12.2014 IT MI20142211
(43) Date of publication of application: 29.06.2016
(73) Proprietor: Soffientini, Paolo, 26848 San Fionano (IT); Cipelletti, Emanuela, 26848 San Fiorano (IT)
(72) Inventor: Soffientini, Paolo, 26848 San Fionano (IT); Cipelletti, Emanuela, 26848 San Fiorano (IT)
(74) Representative: Siniscalco, Fabio

(56) References cited:
- EP-A1- 2 649 886
- EP-A1- 2 700 335
- WO-A1-02/47516
- WO-A1-99/03358
- WO-A1-2010/049956
- GB-A- 614 278

## Description

### INVENTION BACKGROUND

It is an object of the present invention a display batch freezer for ice-creams, sorbets, slushes and similar products.

### KNOWN ART

The batch freezer is a machine that allows transforming a liquid mixture in ice-cream by continuous stirring, cooling and the inclusion of air. The batch freezer comprises one or more batch freezing receptacles being properly cooled, arranged horizontally or vertically, inside each of which a stirrer is rotating continuously.

There exist on the market display batch freezers which have the function of producing and serving an ice-cream being processed in front of the customer. This represents something different from the traditional refrigerating display having receptacles where different ice-cream types being prepared apart using separate batch freezers are presented.

Substantially, the display batch freezer comprises a bench having an upper shelf on which the batch freezing receptacles having stirrers are fitted. Inside the bench, the motors driving the stirrers and the refrigeration circuit are arranged, as well as all the several electrical and electronic components. Outside the bench, command panels are provided. The bench can be provided with an awning, shelves for storing items, protective glass, or other accessories depending on the type of use and needs.

Each batch freezing receptacle is covered by a transparent lid that protects both the product being prepared and the finished product and that also allows the customer to closely follow the ice-cream freezing process.
In the normal refrigerating displays having receptacles, in order to arrange the ice-cream on the cones or in the paper cups, usually a number of scoops, one for each receptacle, is used. When not used, each scoop is kept in the receptacle with the collecting part being inserted in the ice-cream.

In the display batch freezers, this is not possible because in the batch freezing receptacle there is the stirrer and the ice-cream may be in movement therefore the scoop inside the batch freezing receptacle could cause damages. Keeping the scoop outside the batch freezing receptacle involves hygiene problems.

The hygiene problems are bound to the fact that, by keeping the scoop outside, the collecting part becomes a breeding-ground for bacteria, which can be transmitted to the ice-cream being collected using the scoop.
The hygiene situation gets worse if part of the collected ice-cream remains on the scoop and gets even worse if the bench and thus the scoop are in a hot environment. WO2010/049956A1, EP2649886A1, WO02/47516A1, WO99/03358A1 all relate to display batch freezers which have the function of producing and serving an ice-cream being processed in front of the customer.

### OBJECT OF THE INVENTION

Object of the invention is to propose a display batch freezer solving the above-mentioned hygiene problem.

### BRIEF DESCRIPTION OF THE INVENTION

That object is obtained by means of a display batch freezer according to claim 1.

### BRIEF DESCRIPTION OF THE DRAWINGS

In order to better understand the invention, a description of one of its exemplary and non-limiting embodiment is reported in the following, being depicted in the attached drawings where:
Fig. 1 is a partial front perspective view of a display batch freezer according to the invention;
Fig.2 is a front perspective view of a detail of the display batch freezer of fig. 1;
Fig.3 is a lateral perspective view of a detail of the display batch freezer of fig.1;
Fig.4 is a front perspective view of an element of the display batch freezer of fig. 1;
Fig.5 is a front view of the element of fig.4;
Fig.6 is a lateral view of the element of fig.4;
Fig.7 is a lateral perspective view of a component being used in the display batch freezer of fig.1;
Fig.8 is a lateral view of the component of fig.7;
Fig.9 is a top view of the component of fig.7;
Fig.10 is a cross-section along the line 10-10 of fig.9 of the component of fig.7.

### DETAILED DESCRIPTION OF THE INVENTION

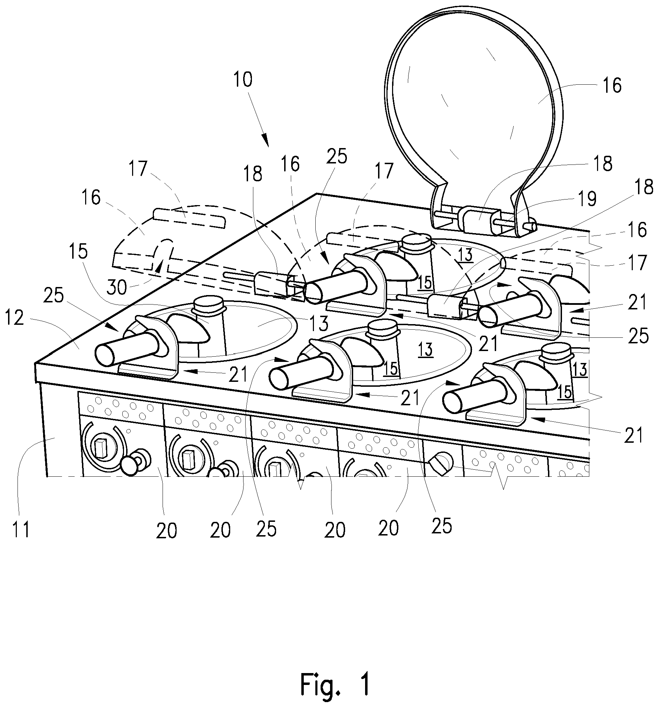

The display batch freezer of fig. 1, being generically shown as 10, includes a bench 11 having a shelf 12.

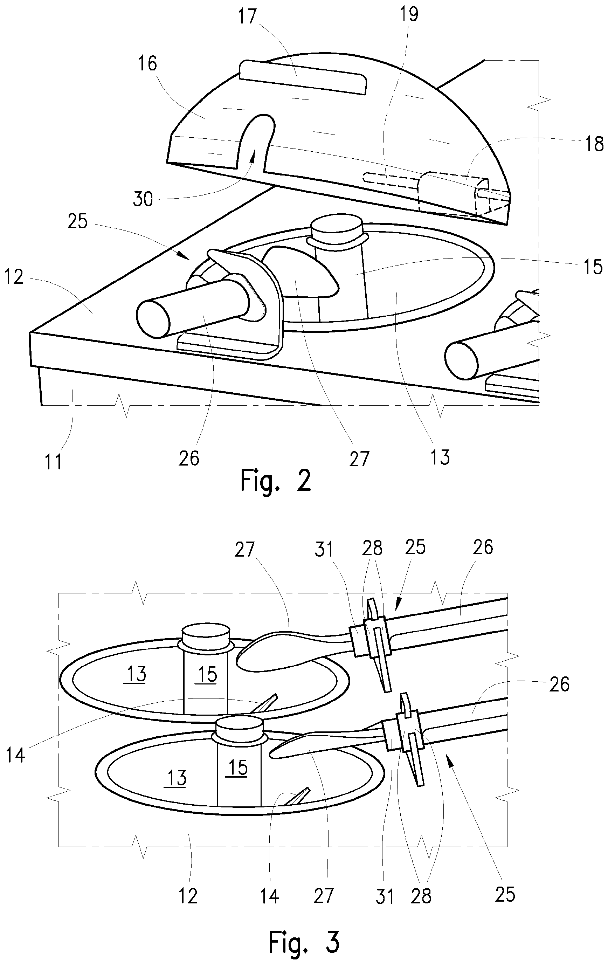

In the shelf 12, a number of batch freezing receptacles 13 is fitted.
In each batch freezing receptacle 13, a stirrer 14 is operating, which is partially visible in fig.3, fitted on a shaft 15, being rotationally driven by a respective electric motor being arranged inside the bench 11. The stirrer 14 is provided with a blade having a scraper and with a mixing blade.

Each batch freezing receptacle 13 is closed by a transparent dome-shaped lid 16. Each lid 16 is provided with a grip 17 and is hinged to a hinge 18 through a rod 19, in order to being able to rotate between a closed position and an open position of the respective batch freezing receptacle 13.
Inside the bench 11, in addition to the motors driving the stirrers 14, there are arranged a refrigeration circuit and several electrical and electronic components.

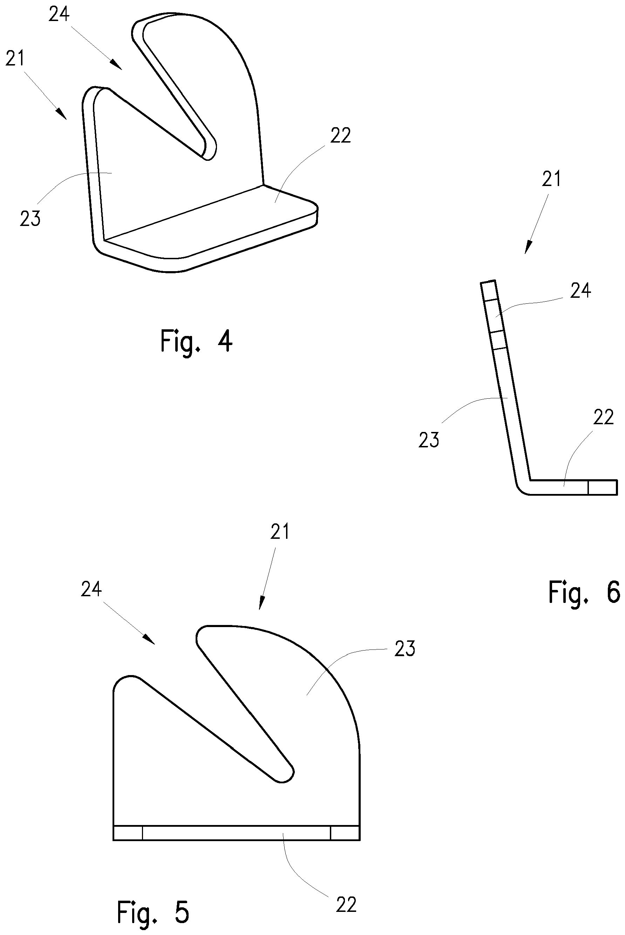

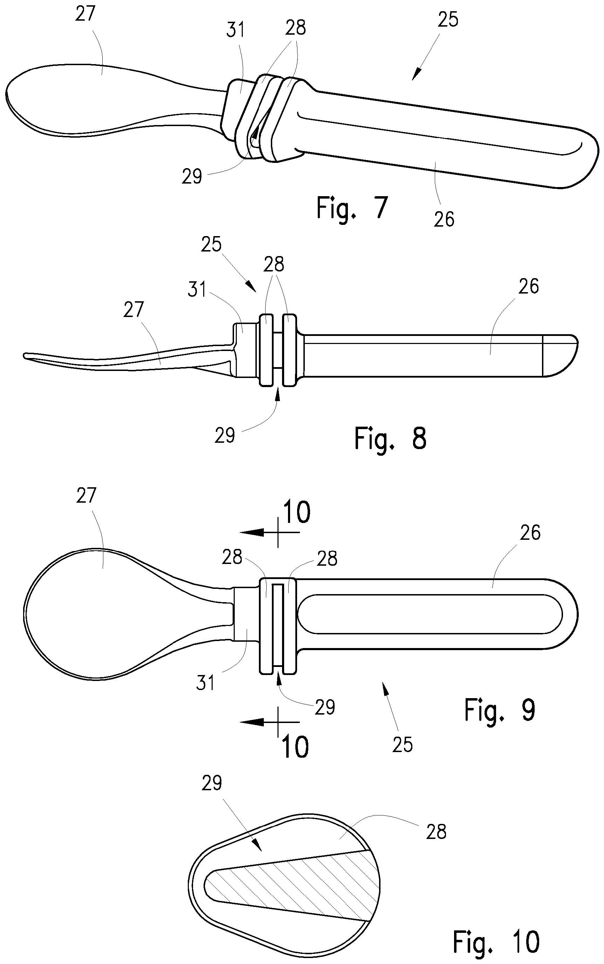

Opposite to the hinge 18 of each lid 16 a magnetic microswitch not shown, is provided which provides for disabling the electrical motor of the stirrer 14 in the batch freezing receptacle 13 being associated to the lid 16, when the lid 16 is opened, in order to prevent the stirrer access when it is moving and avoid damages. The magnetic microswitch can be made by at least one magnet arranged on the edge of the lid 16 and at least one sensor arranged under the shelf 12 in correspondence to the magnet.
On the front wall of the bench 11 a number of control panels 20 is provided, each one being dedicated to a respective batch freezing receptacle 13 and stirrer 14. The controls of each control panel 20 allow regulating the temperature inside the respective batch freezing receptacle 13 and activating or stopping the stirrer 14.
In each batch freezing receptacle 13, a fluid mixture is introduced in order to make the ice-cream, thereafter the refrigeration circuit and the stirrer 14 are activated so to obtain the ice-cream by the combined action of the stirring of the mixture, cooling thereof and air inclusion therein.
In order to collect the ice-cream made in the batch freezing receptacles 13, the display batch freezer 10 provides the following.
Near each batch freezing receptacle 13, a support 21 is provided, which is well visible in figs. 1-3 and shown in detail in figs. 4-6. Each support 21 has a substantially L-shaped profile and comprises a base 22 and a wall 23 extending upwards from one side of the base 22 in a slightly tilted way with respect to the vertical axis. The base 22 is fastened to the supporting plane 12 of the bench 11. The wall 23 has a substantially V-shaped notch 24 being tilted with respect to the vertical axis.
Each support 21 is intended to house a respective scoop 25, which is well visible in figs. 1-3 and shown in detail in figs. 7-10. The scoop 25 comprises an extended gripping part 26 and a concave collecting part 27. The gripping part 26, near the collecting part 27, has two identical and parallel drop profiled reliefs 28, among which an annular groove 29 is formed.
As it is possible to see in figs. 1-3, each scoop 25 is supported by a respective support 21 by inserting the gripping part 26 in the support 21 so that the groove 29 is mechanically coupled to the notch 24 of the wall 23 of the support 21.
The gripping part 26 of the scoop 25 extends outwards from the respective batch freezing receptacle 13, while the collecting part 27 extends inwards the batch freezing receptacle 13 staying over the receptacle edge. Given the tilt of the wall 23 of the support 21, the scoop 25 is slightly forward tilted towards the batch freezing receptacle 13.
In each lid 16, an arc-shaped notch 30 is made in which a connection part 31 of the scoop 25 is inserted between the gripping part 26 and the collecting part 27 when the lid 16 is closed. In this way, the gripping part 26 is outside the lid 16 and the collecting part 27 is inside the lid 16.
When the stirrer 14 is operating in the batch freezing receptacle 13 in order to make ice-cream, the collecting part 27 of the scoop 25 does not interfere with either the stirrer 14 or the product being made, since it is placed over the edge of the batch freezing receptacle 13. Once the ice cream is obtained, the stirrer 14 stopped and the lid 16 opened, it will be possible to collect the ice-cream using the scoop 25 by simply extracting it from its support 21.

The described and shown display batch freezer 10 has several advantages.
When the scoop 25 is on the support 21 and the lid 16 is closed, its collecting part 27 is housed in a protected ambient, inside the lid 16, so to prevent bacteria or other pathogens from depositing thereon, allowing an ice-cream collection that fully satisfies the hygiene requirements.
Moreover, the gripping part 26, which is contacting the operator's hand, stays outside and prevents any ice-cream contamination.

It should be added that the ambient where the collecting part 27 of the scoop 25 is housed is cold since it stands above the batch freezing receptacle 13 inside the lid 16. In this way, the collecting part 27 of the scoop 25 stays cold so that, when the ice-cream is collected using the scoop 25 from the batch freezing receptacle 13 and is arranged on the cone or in the paper cup, it keeps its initial texture, being attractive for the customer. If the scoop 25 is placed in a wrong way on the support 21, the lid 16 does not close correctly and the micro switch does not enable the motor activation of the stirrer 14 so to avoid possible damages.
Using the display batch freezer 10, similarly, it will be possible to make sorbets, slushes and the like.

The configuration of the scoop and its support can vary, as well as the opening shape in the lid can vary.

The support will need to guarantee keeping the scoop firmly in a position where the gripping part is outside the lid and the collecting part is inside the lid; the opening in the lid will need to guarantee that the scoop passes through the lid.

The coupling between the support and the scoop could be an interlocking one as in the example, or an elastic coupling one, or a magnetic one, or the like.

## Claims

1. Display batch freezer (10) for ice-creams, sorbets, slushes and similar products, comprising a bench (11) with a shelf (12) in which at least one batch freezing receptacle (13) is fitted that is closable by a lid (16) and in which a stirrer (14) fitted on a shaft (15) is rotationally driven by a respective electric motor arranged inside the bench (11), **characterised in that** at the batch freezing receptacle (13) a support (21) is fixed on which a tool (25) is fitted removably for collecting the product, wherein the tool (25) comprises a gripping part (26) and a part (27) for collecting the product, wherein the tool (25) is arranged with the gripping part (26) outside the lid (16) and with the collecting part (27) inside the lid (16), and wherein the lid (16) has an opening (30) for the tool (25) to pass through the lid (16).

2. Display batch freezer according to claim 1, wherein a plurality of batch freezing receptacles (13) is provided at each of which there is a respective support (21) and a respective tool (25) for collecting the product.

3. Display batch freezer according to claim 1 or 2, wherein the collecting part (27) of the tool (25) is arranged above the edge of the batch freezing receptacle (13).

4. Display batch freezer according to any one of claims 1 to 3, wherein the tool (25) is coupled mechanically with the support (21).

5. Display batch freezer according to claim 4, wherein the support (21) has a notch (24) into which a grooved part (28, 29) of the tool (25) is inserted.

6. Display batch freezer according to claim 5, wherein the notch (24) has a V shape and the grooved part (28, 29) has a drop-shaped profile.

7. Display batch freezer according to any preceding claim, wherein the opening of the lid is formed by an arc-shaped notch (30).

8. Display batch freezer according to any preceding claim, comprising means for disabling the drive of the stirrer (14) when the lid (16) is open.

9. Display batch freezer according to any preceding claim, wherein the tool (25) has the shape of a scoop.

10. Display batch freezer according to any one of claims 1 to 3, wherein the tool (25) is coupled magnetically with the support (21).

## Patentansprüche

1. Präsentations-Chargengefriereinrichtung (10) für Speiseeis, Sorbets, halbgefrorenes Trinkeis und gleichartige Produkte, umfassend einen Arbeitstisch (11) mit einer Regalplatte (12), worin mindestens ein Chargengefrierbehälter (13) angebracht ist, der mittels eines Deckels (16) verschließbar ist und worin ein auf einer Welle (15) angebrachter Rührer (14) durch einen entsprechenden Elektromotor, der in dem Arbeitstisch (11) angebracht ist, drehangetrieben wird, **dadurch gekennzeichnet, dass** an dem Chargengefrierbehälter (13) eine Stütze (21) angebracht ist, worauf ein Werkzeug (25) zum Entnehmen des Produkts entfernbar angebracht ist,
wobei das Werkzeug (25) einen Griffteil (26) und einen Teil (27) zum Entnehmen des Produkts umfasst,
wobei das Werkzeug (25) mit dem Griffteil (26) außerhalb des Deckels (16) und mit dem Entnahmeteil (27) innerhalb des Deckels (16) angeordnet ist, und wobei der Deckel (16) eine Öffnung (30) für das Werkzeug (25) für dessen Passage durch den Deckel (16) aufweist.

2. Präsentations-Chargengefriereinrichtung nach Anspruch 1, wobei eine Vielzahl von Chargengefrierbehältern (13) vorgesehen ist, wobei sich an jedem davon eine entsprechende Stütze (21) und ein entsprechendes Werkzeug (25) zum Entnehmen des Produkts befinden.

3. Präsentations-Chargengefriereinrichtung nach Anspruch 1 oder 2, wobei der Entnahmeteil (27) des Werkzeugs (25) über dem Rand der Präsentations-Chargengefriereinrichtung (13) angeordnet ist.

4. Präsentations-Chargengefriereinrichtung nach einem der Ansprüche 1 bis 3, wobei das Werkzeug (25) mechanisch mit der Stütze (21) gekoppelt ist.

5. Präsentations-Chargengefriereinrichtung nach Anspruch 4, wobei die Stütze (21) eine Kerbe (24) aufweist, in die ein mit Nuten versehener Teil (28, 29) des Werkzeugs (25) eingebracht wird.

6. Präsentations-Chargengefriereinrichtung nach Anspruch 5, wobei die Kerbe (24) eine V-Form aufweist und der mit Nuten versehene Teil (28, 29) ein tropfenförmiges Profil aufweist.

7. Präsentations-Chargengefriereinrichtung nach gleich welchem vorhergehenden Anspruch, wobei die Öffnung des Deckels durch eine bogenförmige Kerbe (30) gebildet wird.

8. Präsentations-Chargengefriereinrichtung nach gleich welchem vorhergehenden Anspruch, welche Mittel umfasst, um den Antrieb des Rührers (14), wenn der Deckel (16) offen ist, zu deaktivieren.

9. Präsentations-Chargengefriereinrichtung nach gleich welchem vorhergehenden Anspruch, wobei das Werkzeug (25) die Form eines Portionierers aufweist.

10. Präsentations-Chargengefriereinrichtung nach einem der Ansprüche 1 bis 3, wobei das Werkzeug (25) magnetisch mit der Stütze (21) gekoppelt ist.

## Revendications

1. Vitrine de congélation par lots (10) pour glaces, sorbets, granités et produits similaires, comprenant un établi (11) avec un plateau (12) dans lequel est ménagé au moins un récipient de congélation par lot (13) pouvant être fermé par un couvercle (16) et dans lequel un agitateur (14) monté sur un arbre (15) est entraîné en rotation par un moteur électrique respectif agencé à l'intérieur de l'établi (11), **caractérisé en ce qu'**au niveau du récipient de congélation par lot (13) un support (21) est fixé sur lequel un outil (25) est ménagé de manière amovible pour prélever le produit,
dans laquelle l'outil (25) comprend une partie de préhension (26) et une partie (27) pour prélever le produit,
dans laquelle l'outil (25) est agencé avec la partie de préhension (26) à l'extérieur du couvercle (16) et avec la partie pour prélever (27) à l'intérieur du couvercle (16), et
dans laquelle le couvercle (16) comporte une ouverture (30) pour permettre à l'outil (25) de passer à travers le couvercle (16).

2. Vitrine de congélation par lots selon la revendication 1, dans laquelle une pluralité de récipients de congélation par lot (13) est prévue au niveau de chacun desquels se trouve un support respectif (21) et un outil respectif (25) pour prélever le produit.

3. Vitrine de congélation par lots selon la revendication 1 ou 2, dans laquelle la partie pour prélever (27) de l'outil (25) est disposée au-dessus du bord du récipient de congélation par lot (13).

4. Vitrine de congélation par lots selon l'une quelconque des revendications 1 à 3, dans laquelle l'outil (25) est couplé mécaniquement avec le support (21).

5. Vitrine de congélation par lots selon la revendication 4, dans laquelle le support (21) présente une encoche (24) dans laquelle est insérée une partie rainurée (28, 29) de l'outil (25).

6. Vitrine de congélation par lots selon la revendication 5, dans laquelle l'encoche (24) a une forme de V et la partie rainurée (28, 29) a un profil en forme de goutte.

7. Vitrine de congélation par lots selon l'une quelconque des revendications précédentes, dans laquelle l'ouverture du couvercle est formée par une encoche en forme d'arc (30).

8. Vitrine de congélation par lots selon l'une quelconque des revendications précédentes, comprenant des moyens pour désactiver l'entraînement de l'agitateur (14) lorsque le couvercle (16) est ouvert.

9. Vitrine de congélation par lots selon l'une quelconque des revendications précédentes, dans laquelle l'outil (25) a la forme d'une pelle.

10. Vitrine de congélation par lots selon l'une quelconque des revendications 1 à 3, dans laquelle l'outil (25) est couplé magnétiquement avec le support (21).
